(19) **Europäisches Patentamt**
**European Patent Office**
**Office européen des brevets**

(11) **EP 4 520 184 A1**

(12) **EUROPEAN PATENT APPLICATION**
published in accordance with Art. 153(4) EPC

(43) Date of publication:
**12.03.2025 Bulletin 2025/11**

(21) Application number: **23799484.3**

(22) Date of filing: **28.04.2023**

(51) International Patent Classification (IPC):
**A23J 3/14** (2006.01)     **A23C 20/02** (2025.01)
**A23L 5/00** (2016.01)     **A23L 29/00** (2016.01)

(52) Cooperative Patent Classification (CPC):
**A23C 20/02; A23J 3/14; A23L 5/00; A23L 29/00**

(86) International application number:
**PCT/JP2023/016983**

(87) International publication number:
**WO 2023/214554 (09.11.2023 Gazette 2023/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.05.2022 JP 2022076595**

(71) Applicant: **Amano Enzyme Inc.**
**Nagoya-shi**
**Aichi 460-8630 (JP)**

(72) Inventor: **SAKAI, Kiyota**
**Kakamigahara-shi, Gifu 509-0109 (JP)**

(74) Representative: **Müller-Boré & Partner**
**Patentanwälte PartG mbB**
**Friedenheimer Brücke 21**
**80639 München (DE)**

(54) **THICKENER FOR VEGETABLE PROTEIN-CONTAINING COMPOSITION**

(57)     The purpose of the present invention is to provide a new processing technique capable of thickening a vegetable protein-containing composition. A vegetable protein-containing composition containing chia seed protein and/or hemp seed protein can be thickened by treating the composition with a protein deamidase.

EP 4 520 184 A1

**Description**

Technical Field

The present invention relates to a thickener for a plant protein-including composition. More specifically, the present invention relates to a processing technique for thickening a plant protein-including composition including chia seed protein and/or hemp seed protein.

Background Art

For various reasons such as a recent health boom, countermeasures against allergy problems, and religious reasons, plant milk rich in nutrients has become popular as an alternative to animal milk.

Animal milk has a characteristic of changing to various forms by performing predetermined processing, and many dairy products have been created so far and widely permeated by consumers. On the other hand, since the composition of plant milk is fundamentally different from that of animal milk, in the production of a processed product such as an alternative dairy product, a means completely different from the case of using animal milk as a raw material is usually required.

One of the morphological changes required in the processing of plant milk is thickening. In order to perform such thickening, for example, it is known that a thickener of an acid-treated starch derived from pea or potato, a processed starch such as a hydroxypropylated starch, locust bean gum, or guar gum is used (PTL 1).

Citation List

Patent Literature

PTL 1: WO 2018/173610 A

Summary of Invention

Technical Problem

In order to further enhance variations of animal milk substitute foods and further expand the share in the market of drink and food products, a new thickening processing technique is desired so as to be widely applicable to various preparation methods.

Therefore, an object of the present invention is to provide a new processing technique capable of thickening a plant protein-including composition.

Solution to Problem

The present inventor has found that by treating a chia seed protein-including composition and a hemp seed protein-including composition with a protein deamidase, the compositions are thickened. In view of the fact that no thickening effect was known for the protein deamidase and that no thickening effect was observed for many other plant protein-including compositions, it was highly unexpected that a specific thickening effect was obtained for the chia seed protein-including composition and the hemp seed protein-including composition. The present inventors have conducted further studies based on the findings, leading to the completion of the present invention.

That is, the present invention provides inventions of the following aspects.

Item 1. A thickener including a protein deamidase, the thickener being used for thickening a plant protein-including composition including chia seed protein and/or hemp seed protein.

Item 2. The thickener according to item 1, in which a total content of the chia seed protein and the hemp seed protein in the plant protein-including composition is 4 wt% or more.

Item 3. A method for producing a thickened plant protein-including composition, the method including a step of allowing a protein deamidase to act on a plant protein-including composition including chia seed protein and/or hemp seed protein.

Advantageous Effects of Invention

According to the present invention, there is provided a new processing technique capable of thickening a plant protein-including composition.

Description of Embodiments

1. Thickener

A thickener of the present invention includes a protein deamidase, and is used for thickening a plant protein-including composition including chia seed protein and/or hemp seed protein. Hereinafter, the thickener of the present invention will be described in detail.

1-1. Use Application

The thickener of the present invention is used for thickening a plant protein-including composition including chia seed protein and/or hemp seed protein.

The plant protein-including composition to which the thickener of the present invention is applied is a plant protein-including composition including chia seed protein and/or hemp seed protein, and is not particularly limited as long as it has fluidity. As a specific aspect of the plant protein-including composition, a liquid, a slurry, and a paste are mentioned. Since the thickener of the present invention is excellent in the thickening effect, as a suitable aspect of the plant protein-including composition, a liquid is mentioned.

The plant protein-including composition in the case of being a liquid (hereinafter, also referred to as "plant protein-including liquid composition") is not particularly limited as long as it is a liquid including chia seed protein and/or hemp seed protein in water. Specific examples of the plant protein-including liquid composition include (i) a liquid obtained by dispersing, in water, dry powder of a food material including chia seed protein and/or hemp seed protein (specifically, at least one of a plant organ selected from the group consisting of chia seed and hemp seed, and a material obtained by, for example, removing at least a part of components other than the protein from the plant organ to increase the content of the protein); (ii) a liquid obtained by crushing and dispersing chia seed and/or hemp seed in water, and removing an insoluble matter derived from a skin or the like of these seeds by any means such as centrifugation, filtration, filtration bag, or sieve, as necessary; (iii) a liquid obtained by, for example, removing components other than the chia seed protein and/or the hemp seed protein from the liquid of the above (i) or (ii) to increase the content of the protein; and (iv) a liquid obtained by mixing dry powder prepared from the liquid of any one of the above (i) to (iii) with water. As a preferred examples of the plant protein-including composition, plant milk is mentioned.

The chia seed protein and/or the hemp seed protein included in the liquids of the above (i) to (iv) may be in any forms such as a protein (natural protein) included in chia seed and/or hemp seed; a chemically partially decomposed protein of the above-described protein by an acid, an alkali, or the like; an enzymatically partially decomposed protein by a protease or the like; and a chemically modified protein by various reagents. Note that, the term "hemp" which is a hemp seed protein-derived plant organ refers to industrial hemp, and specifically refers to a cultivar which does not contain tetrahydrocannabinol (THC) causing perceptual alterations or has a low THC concentration. Since industrial hemp does not contain THC or has a low concentration thereof, it has no efficacy as a perceptual alteration drug or cannot lead to abuse. Among these proteins, chia seed protein is preferable from the viewpoint of further enhancing the thickening effect.

Note that, in the following description, the "plant protein material content" in the plant protein-including composition is a proportion occupied by the dry weight of the component constituting the above-described plant organ included in the plant protein-including composition. For example, when the plant protein-including composition is a liquid composed only of a component derived from a plant organ and water as in the liquids of the above (i) to (iv), the "plant protein material content" refers to a proportion occupied by the dry weight of the liquid. For example, when the plant protein-including composition is a liquid including the liquids of the above (i) to (iv) and an additive, the "plant protein material content" refers to a proportion occupied by the dry weight of a portion obtained by removing the additive from the liquid.

The content of the chia seed protein and/or the hemp seed protein in the plant protein-including composition to which the thickener of the present invention is applied is not particularly limited, and the total content of the chia seed protein and the hemp seed protein is, for example, 4 wt% or more, preferably 5.5 wt% or more, more preferably 6 wt% or more, further preferably 7 wt% or more, and even more preferably 8 wt% or more.

The upper limit of the content of the chia seed protein and/or the hemp seed protein in the plant protein-including composition is not particularly limited, and the total content of the chia seed protein and the hemp seed protein is, for example, 20 wt% or less, preferably 17 wt% or less, more preferably 13 wt% or less, and further preferably 11 wt% or less or 10 wt% or less.

As for the content of the chia seed protein material and/or the hemp seed protein material (the chia seed protein material and the hemp seed protein material are collectively referred to as "plant protein materials") in the plant protein-including composition, the total content of the plant protein materials is, for example, 4 wt% or more, preferably 5.5 wt% or more, more preferably 6 wt% or more, further preferably 7 wt% or more, even more preferably 8 wt% or more, and further more preferably 9 wt% or more, and the upper limit thereof is, for example, 20 wt% or less, preferably 17 wt% or less, more preferably 13 wt% or less, and further preferably 11 wt% or less.

1-2. Protein Deamidase

The thickener of the present invention includes a protein deamidase as an active ingredient. The thickener of the present invention can thicken a plant protein-including composition to be obtained, by action of the protein deamidase on the plant protein-including composition including chia seed protein and/or hemp seed protein.

The protein deamidase used in the present invention is an enzyme that exhibits an action of decomposing an amide group-including side chain of a protein without cleaving peptide bonds and without crosslinking the protein, and the type, origin, and the like thereof are not particularly limited. As long as the above action is main activity, the protein deamidase may further has an action of decomposing an amide group-including side chain of a protein with cleaving peptide bonds and crosslinking the protein.

Examples of the protein deamidase include an enzyme that deamidates a glutamine residue in a protein and converts it into glutamic acid (for example, protein glutaminase), an enzyme that deamidates an asparagine residue in a protein and converts it into aspartic acid (for example, protein asparaginase), and an enzyme that deiminizes a guanidino group of an arginine residue at the C-terminal of a protein (for example, protein arginine deiminase). Among them, from the viewpoint of further improving the thickening effect, protein glutaminase is preferable.

More specific examples of the protein deamidase include a protein deamidase derived from the genus Chryseobacterium, Flavobacterium, Empedobacter, Sphingobacterium, Aureobacterium, Myroides, Luteimicrobium, Agromyces, Microbacterium, or Leifsonia. These protein deamidases are known, and for example, JP2000-50887A, JP2001-218590A, WO2006/075772A1, WO2015/133590, and the like can be referred to. These protein deamidases may be used singly or in combination of a plurality of kinds thereof.

Among these protein deamidases, from the viewpoint of further improving the thickening effect, a protein deamidase derived from the genus Chryseobacterium is preferable, a protein glutaminase derived from the genus Chryseobacterium is more preferable, a protein glutaminase derived from Chryseobacterium proteolyticum sp. is further preferable, and a protein glutaminase derived from Chryseobacterium proteolyticum strain 9670 is even more preferable.

The protein deamidase can be prepared from a culture solution of a microorganism from which the protein deamidase is derived. Specific examples of the preparation method include a method of recovering a protein deamidase from a culture solution or a bacterial cell of the above-mentioned microorganism. For example, in the case of using a microorganism that secrets a protein deamidase, an enzyme can be separated and/or purified after recovering bacterial cells from the culture solution in advance by filtration, a centrifugal treatment, or the like, as necessary. In the case of using a microorganism that does not secret a protein deamidase, an enzyme can be separated and/or purified after recovering bacterial cells from the culture solution in advance as necessary and then disrupting the bacterial cells by a pressurization treatment, an ultrasonic treatment, a lytic enzymatic treatment, or the like to expose an enzyme. As an enzyme separation and/or purification method, a known protein separation and/or purification method can be used without particular limitation, and examples thereof include a centrifugal separation method, a UF concentration method, a salting-out method, and various chromatography methods using an ion-exchange resin or the like. The separated and/or purified enzyme can be powdered by a drying method such as freeze-drying or reduced-pressure drying, and can also be powdered using an appropriate excipient and/or drying aid in the drying method. The separated and/or purified enzyme can also be liquefied by adding an appropriate additive and performing filtration sterilization.

The amount of the protein deamidase included in the thickener of the present invention is not particularly limited as long as the effect of the protein deamidase can be effectively obtained when the thickener of the present invention is used, and is, for example, 0.1 to 5,000 U/g.

Note that, for the activity of the protein deamidase, benzyloxycarbonyl-L-glutaminylglycine (Z-Gln-Gly) is used as a substrate, and the amount of enzyme that liberates 1 $\mu$mol of ammonia per minute is defined as 1 unit (1 U).

1-3. Other components

The thickener of the present invention may or may not contain other components to the extent that the effect of the present invention is not affected, in addition to the protein deamidase described above. Examples of the other components include enzymes other than the protein deamidase and additives.

As other enzymes, one or more enzymes can be appropriately selected according to a desired reaction other than the reaction by the protein deamidase based on the type or composition of the plant protein-including composition to which the thickener of the present invention is applied.

The additive can be appropriately selected according to a desired formulation form. The formulation form of the thickener of the present invention is not particularly limited, and may be either a solid formulation or a liquid formulation. Therefore, examples of the additive include an excipient, a buffer, a suspending agent, a stabilizer, a preservative, an antiseptic agent, water, and a pH adjuster. These additives may be included singly or in combination of a plurality of kinds thereof.

## 2. Method for Producing Thickened Plant Protein-Including Composition

The present invention also provides a method for producing a thickened plant protein-including composition, the method including a step of allowing a protein deamidase to act on a plant protein-including composition including chia seed protein and/or hemp seed protein.

## 2-1. Step of Allowing Protein Deamidase to Act

The type of the plant protein-including composition, the type of the protein deamidase, and the like in the step of allowing a protein deamidase to act are as shown in the section "1. Thickener" described above.

The amount of the protein deamidase used is not particularly limited, and the amount of the protein deamidase used per 1 g of the total amount of the chia seed protein and the hemp seed protein included in the plant protein-including composition is, for example, 0.25 U or more and preferably 0.5 U or more. From the viewpoint of further improving the thickening effect, the amount of the protein deamidase used per 1 g of the total amount of the chia seed protein and the hemp seed protein included in the plant protein-including composition is preferably 1 U or more, more preferably 2 U or more, further preferably 3 U or more, and even more preferably 4 U or more, 5 U or more, or 5.5 U or more. The upper limit of the range of the amount of the protein deamidase used per 1 g of the total amount of the chia seed protein and the hemp seed protein included in the plant protein-including composition is not particularly limited, and is, for example, 500 U or less, 250 U or less, 100 U or less, 75 U or less, 50 U or less, 25 U or less, 10 U or less, or 7.5 U or less.

Regarding the amount of the protein deamidase used, the amount of the protein deamidase used per 1 g (dry weight) of the total amount of the plant protein materials included in the plant protein-including composition is, for example, 0.25 U or more and preferably 0.5 U or more. From the viewpoint of further improving the thickening effect, the amount of the protein deamidase used per 1 g (dry weight) of the total amount of the plant protein materials included in the plant protein-including composition is preferably 1 U or more, more preferably 2 U or more, further preferably 3 U or more, and even more preferably 4 U or more, or 4.5 U or more. The upper limit of the range of the amount of the protein deamidase used per 1 g (dry weight) of the total amount of the plant protein materials included in the plant protein-including composition is not particularly limited, and is, for example, 500 U or less, 250 U or less, 100 U or less, 75 U or less, 50 U or less, 25 U or less, 10 U or less, or 7.5 U or less.

In the step of allowing a protein deamidase to act, the plant protein-including composition and the protein deamidase are mixed, and the protein deamidase is allowed to act on the protein in the plant protein-including composition, thereby allowing a reaction for improving the viscosity to proceed. As for the reaction conditions, the reaction temperature and pH at which the protein deamidase acts on the protein in the plant protein-including composition, the reaction time for allowing the reaction to proceed sufficient to thicken the composition, and the like can be appropriately set by those skilled in the art through a preliminary test and the like in consideration of the temperature and pH characteristics of the protein deamidase to be used.

The reaction temperature can be determined according to the optimum temperature of the protein deamidase to be used, and the like, and is, for example, 10 to 80°C, preferably 20 to 70°C, more preferably 40 to 60°C, and further preferably 45 to 55°C. The pH can be determined according to the optimum pH of the protein deamidase to be used, and the like, and the pH at 25°C is, for example, 5 to 10, preferably 5 to 8, and more preferably 6 to 8. The reaction time can be determined according to a reaction scale and the like, and is, for example, 1 to 48 hours, preferably 1 to 24 hours, and more preferably 8 to 20 hours or 10 to 18 hours.

## 2-2. Other Steps

The production method of the present invention can include other steps in addition to the above-described step of allowing a protein deamidase to act.

Specific examples of the other steps include a deactivation step of a protein deamidase, a cooling step, and a filtration step.

## 2-3. Thickened Plant Protein-Including Composition

The thickened plant protein-including composition obtained by the production method of the present invention has a higher viscosity than a plant protein-including composition not treated with the thickener of the present invention. The thickened plant protein-including composition can be used, for example, as a plant alternative milk, an alternative cream, an alternative yogurt, an alternative cheese, an alternative ice cream, or the like as it is or by being appropriately prepared.

Examples

Hereinafter, the present invention will be specifically described by means of Examples; however, the present invention is not to be construed as being limited to the following Examples.

[Used Enzyme]

As the protein deamidase, PG which is a protein glutaminase derived from Chryseobacterium proteolyticum (manufactured by Amano Enzyme Inc.) was used.

[Enzyme Activity Measurement Method]

To 1 mL of a 0.2 M phosphate buffer (pH 6.5) including 30 mM Z-Gln-Gly, 0.1 mL of a sample solution including a protein deamidase was added, the mixture was left to stand at 37°C for 10 minutes, and then 1 mL of a 0.4 M TCA solution was added to stop the reaction. As a blank, to 1 mL of a 0.2 M phosphate buffer (pH 6.5) including 30 mM Z-Gln-Gly, 1 mL of a 0.4 M TCA solution was added, 0.1 mL of a sample solution including a protein deamidase was further added, and the mixture was left to stand at 37°C for 10 minutes.

The amount of ammonia generated in the reaction solution was measured for the solution obtained above using Ammonia Test Wako (FUJIFILM Wako Pure Chemical Corporation). The ammonia concentration in the reaction solution was determined from a calibration curve representing the relationship between the ammonia concentration and the absorbance (630 nm) prepared using an ammonia standard solution (ammonium chloride).

The activity of the protein deamidase was calculated from the following formula with the amount of enzyme that produces 1 μmol of ammonia per minute being defined as 1 unit (1 U). In the formula, the reaction solution amount is 2.1, the enzyme solution amount is 0.1, and Df is a dilution rate of the enzyme solution. 17.03 is a molecular weight of ammonia.

[Mathematical Formula 1]

$$\text{Protein deamidase activity (U/mL)}$$
$$= \text{Ammonia concentration (mg/L) in reaction solution} \times (1/17.03)$$
$$\times (\text{Reaction solution amount/Enzyme solution amount}) \times (1/10) \times \text{Df}$$

[Plant Protein Material]

Plant protein materials (all powders) shown in the following table were used.

[Table 1]

| Product name | Plant protein | Protein content (weight basis) | Manufacturer |
|---|---|---|---|
| CHIA SEED PROTEIN | Chia seed protein | 83% or more | Organo Corporation |
| HEMP PROTEIN | Hemp seed[*] protein | 85% or more | Bio Actives Japan Corporation |
| SOYPRO | Soybean protein | 50% or more | J-OIL MILLS, INC. |
| NUTRALYS F85M | Pea protein | 85% or more | Roquette Japan K.K. |
| FAVA BEAN PROTEIN | Fava bean protein | 83.7% or more | Organo Corporation |
| MUNG BEAN PROTEIN | Mung bean protein | 80% or more | Organo Corporation |
| CHICKPEA PROTEIN | Chickpea protein | 84% or more | Organo Corporation |
| LENTIL BEAN PROTEIN | Lentil bean protein | 50% or more | Organo Corporation |
| Lupin isolate | Lupine bean protein | 85% or more | Wide Open Agriculture |
| VITEN | Wheat protein | 80% or more | Roquette Japan K.K. |
| ISHIBASHIKOHGYO BARLEY POWDER | Barley protein | 6.8% | Ishibashikohgyo Co., Ltd. |

(continued)

| Product name | Plant protein | Protein content (weight basis) | Manufacturer |
|---|---|---|---|
| HOKKAIDO RYE WHOLE-WHEAT FLOUR | Rye protein | 7.5 ± 1.0% | TOMIZAWA SHOUTEN |
| ZEIN | Corn protein | 81% or more | FUJIFILM Wako Pure Chemical Corporation |
| OAT PROTEIN | Oat protein | 75% or more | Organo Corporation |
| WHITE SORGHUM FLOUR | Sorghum protein | 10% | NAKANO INDUSTRY CO., LTD. |
| ALMOND PROTEIN | Almond protein | 60% or more | Bio Actives Japan Corporation |
| WALNUT PROTEIN | Walnut protein | 15.2% | TOMIZAWA SHOUTEN |
| (*) Hemp seed is derived from industrial hemp not including THC. | | | |

[Test Example]

(1) Test Operation

Each plant protein material in Table 1 was mixed with a phosphate buffer having a pH of 7.0 (25°C) so that the amount of the plant protein material was 10 wt%, thereby preparing a plant protein-including liquid composition. To the plant protein-including liquid composition, PG in an amount of 5 U per 1 g of the plant protein material was added, and the mixture was incubated at 50°C overnight to obtain a treated plant protein-including composition (PG "Present"). Separately, the same operation was performed except that PG was not added to obtain a treated plant protein-including composition (PG "Absent").

(2) Viscosity Evaluation

In a 50 mL tube, 30 mL of the PG-treated plant protein-including composition obtained in the above (1) was put, and the degree of viscosity that can be grasped based on the speed of liquid transfer when the composition was mixed with inversion in an environment at room temperature (25°C) was compared with the plant protein-including composition not treated with PG (without PG). Note that, the mixing with inversion was performed by performing a cycle of 180° inversion and then returning with -180° inversion at a speed of about 2 seconds per cycle. It can be evaluated that as the speed at which the plant protein-including composition moves with respect to the speed of inversion is slower, the viscosity is higher. The degree of thickening of the PG-treated plant protein-including composition by this comparison was classified based on the following criteria. The results are shown in Table 2.

×× : The viscosity was considerably lowered as compared to the case without PG.
× : The viscosity was lowered as compared to the case without PG.
- : There was no change compared to the case without PG.
∘ : The viscosity was increased as compared to the case without PG.
⊙ : The viscosity was considerably increased as compared to the case without PG.

[Table 2]

| | Protein source | Thickening evaluation |
|---|---|---|
| Example 1 | Chia seed | ⊙ |
| Example 2 | Hemp | ∘ |
| Comparative Example 1 | Soybean | × |
| Comparative Example 2 | Pea | ×× |
| Comparative Example 3 | Fava bean | × |

(continued)

|  | Protein source | Thickening evaluation |
|---|---|---|
| Comparative Example 4 | Mung bean | × |
| Comparative Example 5 | Chickpea | - |
| Comparative Example 6 | Lentil bean | - |
| Comparative Example 7 | Lupine bean | ×× |
| Comparative Example 8 | Wheat | × |
| Comparative Example 9 | Barley | - |
| Comparative Example 10 | Rye | - |
| Comparative Example 11 | Corn | ×× |
| Comparative Example 12 | Oat | × |
| Comparative Example 13 | Sorghum | × |
| Comparative Example 14 | Almond | - |
| Comparative Example 15 | Walnut | - |

As shown in Table 2, thickening was observed by subjecting the chia seed protein-including liquid composition and the hemp seed protein-including liquid composition to PG treatment (Examples 1 and 2), and the effect thereof was particularly remarkable in the case of the chia seed protein-including liquid composition (Example 1). Note that, thickening was not observed even after PG treatment for many other plant proteins including almond protein and walnut protein which are seed proteins similar to the chia seed protein and the hemp seed protein (Comparative Examples 1 to 15), and in some of them, the viscosity rather decreased. Therefore, it was found that the thickening effect observed in Examples 1 and 2 is an effect specific to the chia seed protein-including liquid composition and the hemp seed protein-including liquid composition.

**Claims**

1. A thickener comprising a protein deamidase, the thickener being used for thickening a plant protein-including composition including chia seed protein and/or hemp seed protein.

2. The thickener according to claim 1, wherein a total content of the chia seed protein and the hemp seed protein in the plant protein-including composition is 4 wt% or more.

3. A method for producing a thickened plant protein-including composition, the method comprising a step of allowing a protein deamidase to act on a plant protein-including composition including chia seed protein and/or hemp seed protein.

| **INTERNATIONAL SEARCH REPORT** | International application No. |
|---|---|
| | **PCT/JP2023/016983** |

**A.  CLASSIFICATION OF SUBJECT MATTER**

*A23J 3/14*(2006.01)i; *A23C 20/02*(2021.01)i; *A23L 5/00*(2016.01)i; *A23L 29/00*(2016.01)i
FI:   A23J3/14; A23C20/02; A23L5/00 M; A23L29/00

According to International Patent Classification (IPC) or to both national classification and IPC

**B.  FIELDS SEARCHED**

Minimum documentation searched (classification system followed by classification symbols)

A23J3/14; A23C20/02; A23L5/00; A23L29/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | WO 2022/045152 A1 (AMANO ENZYME INC.) 03 March 2022 (2022-03-03) | 1-3 |
| A | WO 2020/171106 A1 (AMANO ENZYME INC.) 27 August 2020 (2020-08-27) | 1-3 |
| P, A | WO 2022/215688 A1 (AMANO ENZYME EUROPE LTD.) 13 October 2022 (2022-10-13) | 1-3 |
| P, A | WO 2022/215689 A1 (AMANO ENZYME EUROPE LTD.) 13 October 2022 (2022-10-13) | 1-3 |
| P, A | WO 2022/270589 A1 (AMANO ENZYME INC.) 29 December 2022 (2022-12-29) | 1-3 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 June 2023** | **18 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/016983**

| Patent document cited in search report | | | Publication date (day/month/year) | Patent family member(s) | | | Publication date (day/month/year) |
|---|---|---|---|---|---|---|---|
| WO | 2022/045152 | A1 | 03 March 2022 | (Family: none) | | | |
| WO | 2020/171106 | A1 | 27 August 2020 | US | 2022/0151255 | A1 | |
| | | | | US | 2022/0151254 | A1 | |
| | | | | EP | 3928628 | A1 | |
| | | | | EP | 3928627 | A1 | |
| | | | | WO | 2020/171105 | A1 | |
| WO | 2022/215688 | A1 | 13 October 2022 | (Family: none) | | | |
| WO | 2022/215689 | A1 | 13 October 2022 | (Family: none) | | | |
| WO | 2022/270589 | A1 | 29 December 2022 | (Family: none) | | | |

Form PCT/ISA/210 (patent family annex) (January 2015)

**REFERENCES CITED IN THE DESCRIPTION**

**Patent documents cited in the description**

- WO 2018173610 A
- JP 2000050887 A
- JP 2001218590 A
- WO 2006075772 A1
- WO 2015133590 A